# EUROPÄISCHE PATENTSCHRIFT

(11) **EP 2 053 071 B1**
(45) Veröffentlichungstag und Bekanntmachung des Hinweises auf die Patenterteilung: **21.04.2010**
(21) Anmeldenummer: 08104763.1
(22) Anmeldetag: 16.07.2008
(51) Int. Cl.: C08G 63/78

(54) **Verfahren und Vorrichtung zur Erzeugung von Vakuum bei der Herstellung von Polyestern und Copolyestern**
Method and device for producing vacuum in the production of polyesters and copolyesters
Procédé et appareil pour produire du vide dans la production de polyesters et de copolyesters

(30) Priorität: 23.10.2007 DE 102007050929
(43) Veröffentlichungstag der Anmeldung: 29.04.2009
(73) Patentinhaber: Lurgi Zimmer GmbH, 60295 Frankfurt am Main (DE)
(72) Erfinder: Reisen, Michael, 60316 Frankfurt am Main (DE); Kriesche, Gerald, 63322 Rödermark (DE)
(74) Vertreter: Meyer-Dulheuer, Karl-Hermann

(56) Entgegenhaltungen:
- EP-A- 0 685 502
- WO-A-2005/082970
- DE-A1- 10 127 147

## Beschreibung

Die Erfindung betrifft ein Verfahren zur Herstellung von Polyestern, insbesondere Polyethylenterephthalat (PET), Polybutylenterephthalat (PBT), Polyethylennaphthalat (PEN) und Polytrimethylenterephthalat (PTT), und Copolyestern sowie eine Vorrichtung zur Durchführung des Verfahrens. Insbesondere geht es um eine spezielle Ausgestaltung der Vorrichtung bzw. des Verfahrens in Bezug auf die Erniedrigung des Druckes bzw. die Erzeugung desVakuums in den eingesetzten Reaktoren bzw. Druckstufen.

### Stand der Technik

Mehrstufige Verfahren und Vorrichtungen zur Herstellung von Polyestern und Copolyestern sind bekannt.

Ein typischer Vertreter solcher Vorrichtungen besteht beispielsweise im Wesentlichen aus zwei Veresterungsreaktoren und zwei Polykondensationsreaktoren:

In einer Mischvorrichtung werden eine Säurekomponente und eine Alkoholkomponente - im Falle von PET, Terephthalsäure und Ethylenglykol - gemischt, um anschließend einem ersten Veresterungsreaktor zugeführt zu werden. Bei der PET-Herstellung findet die Reaktion dort bei etwa 240 - 280°C und erhöhtem Druck statt und wird anschließend in einem zweiten Veresterungsreaktor, welcher unter Normaldruck arbeitet, im Wesentlichen abgeschlossen.

Die Veresterungsreaktoren sind meist mit einer Rektifikationskolonne verbunden, welche die Aufgabe hat, die großen Mengen anfallender Brüden aufzutrennen, d.h. vornehmlich das während der Reaktion entstehende Wasser von mitgerissenen Monomerenkomponenten - bei der PET-Herstellung insbesondere Ethylenglykol - zu trennen, um letztere wieder der Veresterungsreaktion zuführen zu können. Das oben aus der Rektifikationskolonne abgezogene, gasförmige Wasser wird kondensiert und der Kolonne teilweise wieder als Rückfluss zugeführt.

Das Produkt der Veresterungsreaktion wird anschließend zur weiteren Oligomerisierung einem oder mehreren Vorpolykondensationsschritten unterzogen. Auf diese Weise kann eine ausreichend hohe Viskosität für die Endpolykondensation erreicht werden, bei der oft ein Ringscheibenreaktor zum Einsatz kommt. Dabei finden die Kondensationsreaktionen, d.h. die Vorpolykondensation und die Poly- bzw. Endkondensation unter vermindertem Druck bzw. einem Vakuum statt, welches durch Vakuumaggregate hergestellt werden muss.

Aus dem europäischen Patent EP 0244546 B1 ist ein Verfahren zur Herstellung hochmolekularer Polyester bekannt, bei dem die Veresterung in einer zwei oder mehrstufigen Reaktoranordnung und die Polykondensation anschließend unter Vakuum in mindestens einem Vakuumreaktor stattfinden. Dabei wird der aus den Veresterungs-Brüden mittels Rektifikation gewonnene Wasserdampf sowohl als Treibstrom für ein- oder mehrstufige Dampfstrahlvakuumaggregate genutzt, als auch in flüssiger Form in den den Wasserdampfstrahlpumpen nachgeordneten Mischkondensatoren zur Kondensation von Prozessbrüden eingesetzt.

Der Nachteil dieses Verfahrens liegt darin, dass ein Teil des in den Brüden der Vakuumstufen enthaltenen Diols von den Wasserdampfstrahlern abgesaugt wird und verloren geht. Um dem teilweise entgegen zu wirken, muss die Vorkondensation der Brüden bei sehr niedrigen Temperaturen erfolgen. Dies führt zu einem vermehrten Ausfall von Oligomeren, die die Rohrleitungen und den Wärmetauscher verstopfen.

Nach EP 0685502 B1 erfolgt die Erzeugung des Vakuums im Polykondensationsreaktor durch Glykolgasstrahlpumpen. Letzteren sind Glykolmischkondensatoren nachgeschaltet, wobei die Betriebsbedingungen für diese so eingestellt werden, dass das Glykol aus dem Brüden möglichst vollständig kondensiert, während leichter siedende Reaktionsnebenprodukte einschließlich Wasser soweit wie möglich in der Gasphase verbleiben und erst in einer letzten Kondensationsstufe niedergeschlagen werden. Das in den Mischkondensatoren niedergeschlagene Glykol wird einerseits nach Verdampfung als Treibmedium in den Gasstrahlpumpen verwendet und andererseits als Kondensationsmittel in den Mischkondensatoren eingesetzt. Das Kondensat aus der letzten Stufe kann ohne weitere Reinigung oder nach einer destillativen Aufarbeitung dem Polyesterherstellungsprozess wieder zugeführt werden, wodurch verhindert wird, dass sich zuviel Reaktionsnebenprodukt im Glykolkreislauf ansammelt. Nachteilig ist bei diesem Verfahren, dass zur Erzeugung des benötigten Glykoldampfes als Treibmittel für die Dampfstrahlpumpen Energie benötigt wird.

In DE 101 27 147 wird ebenfalls ein Verfahren zur Herstellung von Polyestern und Copolyestern beschrieben, wobei sich das Dokument lediglich mit der Verbesserung des die Veresterung betreffenden Teils des Verfahrens beschäftigt. Die Besonderheit besteht darin, dass bei von Reaktionsstufe zu Reaktionsstufe sukzessive abfallendem Druck, die Brüdenströme der einzelnen Veresterungsstufen vereinigt in einer Trennkolonne rektifiziert werden. Da der Druck der letzten Veresterungsstufe geringer als der Druck der Rektifikationskolonne ist, müssen die aus ihr austretenden Brüden auf den Kolonnendruck verdichtet werden. Dies kann mittels Kompressor, Gebläse, Ventilator oder unter Ausnutzung unrektifizierter Brüden als Treibstrom einer Dampfstrahlpumpe geschehen.

### Aufgabenstellung:

Der Erfindung liegt die Aufgabe zugrunde, die nach dem Stand der Technik bekannten Verfahren und Vorrichtungen für die Herstellung von Polyestern und/oder Copolyestern zu vereinfachen, unter ökonomischen bzw. ökologischen Gesichtspunkten zu verbessern, eine verfahrenstechnische Flexibilisierung zu erreichen und insbesondere Energie einzusparen.

Die Aufgabe wird erfindungsgemäß gelöst durch ein Verfahren zur Herstellung von Polyestern und/oder Copolyestern in mehreren Prozessstufen gemäß Anspruch 1, beinhaltend eine oder mehrere Veresterungs- bzw. Umesterungsstufen und eine oder mehrere Polykondensationsstufen, wobei der unrektifizierte Brüden aus mindestens einer Veresterungs- bzw. Umesterungsstufe zumindest teilweise zur Erzeugung mindestens eines Teils des Vakuums für eine oder mehrere der nachfolgenden Polykondensationsstufen verwendet wird.

Insbesondere ist in diesem Zusammenhang die Verwendung von Brüden aus Veresterungsstufen von Bedeutung. Es können aber auch Brüden aus Umesterungsstufen verwendet werden, wenn deren Tauglichkeit in gewissem Umfang auch von der Art der eingesetzten Ausgangstoffe und damit dem Anteil an Leichtsiedern abhängt, welche in einem Vakuumsystem schwerer zu kondensieren sind.

Für die Veresterung bzw. Umesterung werden bekannte, hintereinander geschaltete Reaktoren bzw. Druckstufen verwendet, wobei es nicht relevant ist, ob diese in einer einzigen Apparatur oder als getrennte Einheiten angeordnet sind.

Unter "Polykondensationsstufen" sind im Zusammenhang mit der Vakuumerzeugung auch Vorpolykondensations- sowie Endpolykondensationsstufen zu verstehen. Prinzipiell können die erwähnte Verfahrensmerkmalskombinationen bzw. die weiter unten genannten Vorrichtungsmerkmalskombinationen zur Vakuumerzeugung jedoch in jedem Teil des Polyesterherstellungsprozesses, in dem eine Drucksenkung erreicht werden soll, eingesetzt werden.

Im vorliegenden Verfahren handelt es sich beim herzustellenden Polyester bzw. Copolyester vorzugsweise um Polyethylenterephthalat (PET), Polybutylenterephthalat (PBT), Polyethylennaphthalat (PEN) und Polytrimethylenterephthalat (PTT), wobei sowohl lineare als auch verzweigte Polymere Gegenstand der vorliegenden Erfindung sein können.

Es gehört zum Wissen eines Durchschnittsfachmanns, dass Temperaturen und Drücke in den einzelnen Reaktoren bei der Herstellung von Polymeren bzw. Copolymeren in Abhängigkeit davon, ob es sich um eine Veresterungs- oder eine Umesterungsreaktion handelt und je nach herzustellendem (Co-)Polymer unterschiedlich sein müssen.

Beispielsweise werden alle Druckstufen im Falle der PBT-Herstellung normalerweise bei Unterdruck gefahren, während bei PET und PTT die erste Reaktionsstufe im Allgemeinen mit Überdruck betrieben wird etc. Die zu verwendenden Drücke und Temperaturen in den einzelnen Reaktoren sind dem Fachmann bestens bekannt und in diversen Fachbüchern, Fachartikeln und Patentschriften ausführlich beschrieben (vgl. z.B. Schumann, Heinz-Dieter: "Polyester producing plants: principles and technolgy"; Die Bibliothek der Technik; Bd. 132; 1990)

Entsprechend dem herzustellenden Polyester ist mit dem Begriff "unrektifizierter Brüden" jeweils ein etwas anderes Gemisch bezeichnet. Im Allgemeinen soll darunter der in der Veresterungs- bzw. Umesterungsstufe entstehende Brüden vor einer Auftrennung oder vor der Zerlegung in einer Rektifikationskolonne verstanden werden.

Meist enthält er bei Veresterungsreaktionen neben Reaktionsnebenprodukten einerseits einen hohen Anteil an Wasser und andererseits eine ebenfalls große Menge der Alkoholkomponente aus der Veresterungsreaktion, wobei unter dem Begriff "Alkoholkomponente" der als Monomer in der Veresterungsreaktion eingesetzte zweiwertige Alkohol verstanden werden soll. Dieser Diol ist vom in gängigen Umesterungsreaktionen abgespaltenen, normalerweise einwertigen Alkohol zu unterscheiden.

Die Brüden aus Umesterungsreaktionen bestehen im Gegensatz zu denjenigen aus einer Veresterungsreaktion, oft vornehmlich aus der als Monomer eingesetzten Alkoholkomponente und dem erwähnten, während der Umesterungsreaktion entstandenen, einwertigen Alkohol (z.B. Methanol). Ihre Zusammensetzung hängt jedoch in dem Fachmann bekannter Weise vom herzustellenden Polymer und den eingesetzten Ausgangsstoffen ab.

Der Druck in der ersten Veresterungsstufe liegt bei den meisten Polyesterherstellungsverfahren zwischen 0 und 4 bar Überdruck. Die unrektifizierten Brüden eignen sich folglich gut für einen wirtschaftlichen Betrieb von Gasstrahlpumpen, wobei der zu verwendende Druck des Treibmediums in dem Fachmann bestens bekannter Art auf die Bauweise des Dampfstrahlers abzustimmen ist. Vorzugsweise beträgt er 0.5 - 3.0 bar, besonders bevorzugt 0.5 - 2.0 bar Überdruck.

Im Zusammenhang mit der Lösung der oben beschriebenen Aufgabe der Erfindung ist auch eine im Folgenden beschriebene, angepasste Vorrichtung gemäß Anspruch 6 zur Durchführung des genannten Verfahrens Gegenstand der Erfindung. Es handelt sich um eine Vorrichtung zur Herstellung von Polyestern und/oder Copolyestern, beinhaltend eine oder mehrere Veresterungs- und oder Umesterungsstufen, eine oder mehrere damit verbundene Trenneinrichtungen, und eine oder mehrere Polykondensationsstufen, wobei die Vorrichtung zwischen Veresterungs- und oder Umesterungsstufe und damit verbundener Trenneinrichtung apparative Mittel zur Abzweigung zumindest eines Teils des aus dem von der Veresterungs- und oder Umesterungsstufe in die Trenneinrichtung fließenden unrektifizierten Brüden aufweist, die wiederum mit apparativen Mitteln zur Vakuumerzeugung verbunden sind, welche einer oder mehreren Polykondensationsstufen zugeordneten sind.

Unter "in die Trenneinrichtung fließenden unrektifizierten Brüden" soll nicht nur passiv fließender, sondern auch aktiv transportierter, z.B. gepumpter Brüden verstanden werden.

Weiterhin bedeutet der Ausdruck "Trenneinrichtung" jede zur Trennung von Brüden einsetzbare Vorrichtung, vorzugsweise eine Rektifikationskolonne aber beispielsweise auch Partialkondensation oder ein anderes destillationsbasiertes oder auch Zentrifugalkräfte nutzendes Trennverfahren.

Bei den genannten Mitteln zur Abzweigung von Brüden handelt es sich normalerweise um eine oder mehrere einfache Rohrleitungsabzweigungen mit oder ohne einem oder mehreren Druckregelventilen.

Die apparativen Mittel zur Vakuumerzeugung sind vorzugsweise Vakuumaggregate, welche Gasstrahlpumpen - vorzugsweise in Verbindung mit Kondensatoren - aufweisen :

Des Weiteren sollen die Mittel zur Abzweigung von Brüden bevorzugt dem Fachmann bekannte Mittel zur Steuerung der abgezweigten Brüdenmenge aufweisen, vorzugsweise sind dies Mittel zur Druckregelung oder Mengenregelung.

Die Notwendigkeit einer solchen Steuerung ergibt sich aus der Tatsache, dass die bei der Veresterungsreaktion entstehende Brüdenmenge über die Zeit nicht konstant ist, sondern schwanken kann. Insbesondere ist deshalb bei der Verwendung von Gasstrahlpumpen als Vakuum erzeugende Mittel die Möglichkeit, den Druck der zur Vakuumerzeugung eingesetzten unrektifizierten Brüden konstant zu halten, wichtig.

Indem der Brüden bzw. ein Teil davon nicht unmittelbar in einer Trenneinrichtung, vorzugsweise einer Rektifikationskolonne, in seine Komponenten aufgetrennt, sondern in unrektifizierter Form abgezweigt wird, eröffnet sich die Möglichkeit des Einsatzes eines (markant größeren) Teils der im Brüden vorhandenen Energiemenge zur Generierung der in den verschiedenen Reaktoren notwendigen Vakua. Primär sind zur Vakuumerzeugung Gasstrahlpumpen vorgesehen, in denen der Brüden als Treibstrom eingesetzt werden kann.

Das beanspruchte verfahren wird derart durchgeführt, daß der zur Erzeugung mindestens eines Teils des Vakuums verwendete unrektifizierte Brüden als Treibgas in mindestens zwei Gasstrahlpumpen verwendet wird.

Entsprechend ist die beanspruchte Vorrichtung so ausgestaltet, daß die apparativen Mittel zur Abzweigung unrektifizierter Brüden mit apparativen Mitteln zur Vakuumerzeugung verbunden sind, welche mindestens zwei Gasstrahlpumpen aufweisen.

Vorteilhaft an der Verwendung von Gasstrahlpumpen in diesem Zusammenhang, ist deren einfacher Aufbau, die damit einhergehende Zuverlässigkeit und ein sehr geringer Verschleiß. Von besonderer Bedeutung ist aber auch, dass der Brüden aus der Veresterungs- bzw. Umesterungsreaktion aufgrund von Phase (gasförmig) und Temperatur direkt als Energieträger in Form eines Treibmediums in diesen Pumpen eingesetzt werden kann. Außerdem sind Gasstrahlpumpen auch in Bezug auf die Betriebssicherheit im Umgang mit brennbaren Substanzen unbedenklicher als andere Arten von Pumpen, beispielsweise solche, die elektrisch betrieben werden.

Ferner ist es von Vorteil, in den genannten Verfahren zumindest einen Teil des Vakuums mittels mehrerer hintereinandergeschalteter Gasstrahlpumpen unter Verwendung des unrektifizierten Brüden als Treibmittel zu erzeugen.

Die mit fortschreitender Reaktionsstufenfolge abnehmenden Drücke bzw. stärkeren Vakua können durch eine auf die jeweiligen Druckverhältnisse angepasste Anzahl hintereinandergeschalteter Gasstrahlpumpen, bzw. mehrstufige Gasstrahlpumpen erreicht werden. Der sich unterscheidende Druck in den Reaktoren d.h. beispielsweise der im Vergleich zur Vorkondensation geringere Druck im Endreaktor, verlangt in Bezug auf die notwendige Verdichtung des jeweiligen Brüden ebenfalls nach unterschiedlichen Lösungen.

Es werden also bevorzugt auf den jeweiligen Reaktordruck angepasste, ein- oder mehrstufige Gasstrahlkaskaden eingesetzt, um die verschiedenen Brüden auf einen einheitlichen Druck zu verdichten, und sie so beispielsweise einer gemeinsamen Kondensationseinheit zuführen zu können.

Insbesondere sind die erwähnten Verfahren dann besonders vorteilhaft, wenn der zur Erzeugung des Vakuums eingesetzte unrektifizierte Brüden nachfolgend einer Trennkolonne zugeführt wird

Im Allgemeinen ist eine Ausgestaltung der erwähnten Verfahren von Bedeutung, in der zur Erzeugung des Vakuums eingesetzte unrektifizierte Brüden - im Allgemeinen zusammen mit den abgepumpten Brüden aus den Vakuumstufen - nachfolgend, d.h. bevorzugt nach dem Durchlaufen von Gasstrahlpumpen, zumindest teilweise kondensiert und/oder zumindest teilweise einer Trennkolonne zugeführt werden.

Soll ein Teil der genannten, zur Erzeugung des Vakuums eingesetzten, unrektifizierten Brüden einer Trennkolonne zugeführt werden, so besteht eine bevorzugte Ausgestaltung darin, dass zwischen den Mitteln zur Vakuumerzeugung und der Rektifikationskolonne vorzugsweise mindestens ein Kondensator, bevorzugt ein Misch- bzw. Einspritzkondensator, vorgesehen ist, wobei es sich aber auch um andere oder auch mehrere verschiedene Kondensatoren handeln kann. Als Beispiel eines alternativen Kondensators sei ein Kratzkühler genannt. Eine direkte Zuführung in eine Trennkolonne ist jedoch nicht ausgeschlossen.

Wird ein Teil der genannten, zur Erzeugung des Vakuums eingesetzten, unrektifizierten Brüden einer Kondensation zugeführt, so können die kondensierten Brüdenanteile zumindest teilweise, bevorzugt nach Durchlaufen einer Kühleinrichtung, wiederum als Kondensationsmittel in Kondensatoren, vorzugsweise Mischkondensatoren, eingesetzt werden. Vorteilhaft ist es, einen Teil des kondensierten Brüdens bevorzugt vor dem Eintritt in die Kühleinrichtung auszuschleusen und in flüssiger Form einer Trennkolonne, vorzugsweise der genannten, mit einem oder mehreren Veresterungsreaktoren verbundenen Rektifikationskolonne, zuzuleiten.

Apparativ ist also eine der erwähnten Vorrichtungen bevorzugt, in der mindestens einem Teil der Gasstrahlpumpen mindestens ein Kondensator nachgeordnet ist, und insbesondere ist eine der genannten Vorrichtungen auch vorteilhaft, wenn den apparativen Mitteln zur Vakuumerzeugung mindestens eine Rektifikationskolonne nachgeordnet ist.

Auch ist ein wie in dieser Anmeldung beschriebenes Verfahren dann von besonderer Bedeutung, wenn der Druck des zur Vakuumerzeugung eingesetzten unrektifizierten Brüden näherungsweise konstant gehalten wird.

Ein konstanter Druck des zur Vakuumerzeugung eingesetzten unrektifizierten Brüden ist bei Verwendung desselben als Treibmedium in Gasstrahlpumpen deshalb wünschenswert, weil nur bei näherungsweise konstantem Vordruck auch eine konstante Gasstrahlpumpenleistung erreicht werden kann.

Um eine Flexibilisierung des Verfahrens zu erreichen, kann die Vakuumerzeugung unter Verwendung unrektifizierter Brüden durch ein zweites System ergänzt werden. Das heißt, dass eines der oben genannten Verfahren insbesondere dann sehr vorteilhaft ist, wenn ein Teil des in den Prozessstufen, vorzugsweise Polykondensationsstufen, besonders bevorzugt Endpolykondensationsstufen, notwendigen Vakuums durch eine oder mehrere Gasstrahlpumpen erzeugt wird, welche als Treibgas ein im wesentlichen reines Diol verwenden, wobei es sich bei dem Diol vorzugsweise um das in der Veresterungs- bzw. Umesterungsreaktion als Alkoholkomponente eingesetzte Diol handelt.

Es wurde überraschenderweise gefunden, dass ein solches Verfahren nicht nur sehr flexibel ist, beispielsweise in bezug auf Durchsatzänderungen und unter Verwendung einer Druckregulierung, sondern davon abgesehen auch energetisch markante Vorteile bringt. So kann eine Einsparung von bis zu 5% der erforderlichen Prozesswärme gegenüber einem reinen Glykolstrahlersystem wie es im Beispiel 2 beschriebenen ist, erreicht werden.

Das Diol wird in diesem zweiten System bevorzugt auch als Kondensationsmittel beispielsweise in Sprühkondensatoren eingesetzt.

Bei der Herstellung von PET handelt es sich bei der im oben genannten mit Diol betriebenen zweiten System eingesetzten Alkoholkomponente um Ethylenglykol, d.h. im entsprechenden Vakuumaggregat kommen Ethylenglykol-Gasstrahlpumpen zum Einsatz.

Es handelt sich also vorzugsweise um ein Kreislaufsystem, in dem die Alkoholkomponente in erhitzter Form als Treibmedium in den Gasstrahlpumpen und in gekühlter Form als Kondensationsmittel in Kondensatoren eingesetzt wird.

Die als Treibmedium eingesetzte Alkoholkomponente mischt sich in den Gasstrahlpumpen des zweiten Systems mit den aus den Vakuumreaktoren abgepumpten Brüden, wird darauffolgend vorzugsweise in ebenfalls mit der Alkoholkomponente betriebenen Kondensatoren niedergeschlagen, anschließend gekühlt und im Kreis zurückgefahren, um wiederum als Kondensationsmittel zu dienen.

Die in den Kondensatoren verbleibenden gasförmigen Anteile des Brüdens werden gegebenenfalls nach einem oder mehreren weiteren Kondensationen schließlich bevorzugt dem Vakuumaggregat zugeleitet, welches mit den unrektifizierten Brüden betrieben wird. Dabei wird die Kondensationstemperatur vorzugsweise so geführt, dass die leichter siedenden Komponenten überwiegend in der Gasphase verbleiben.

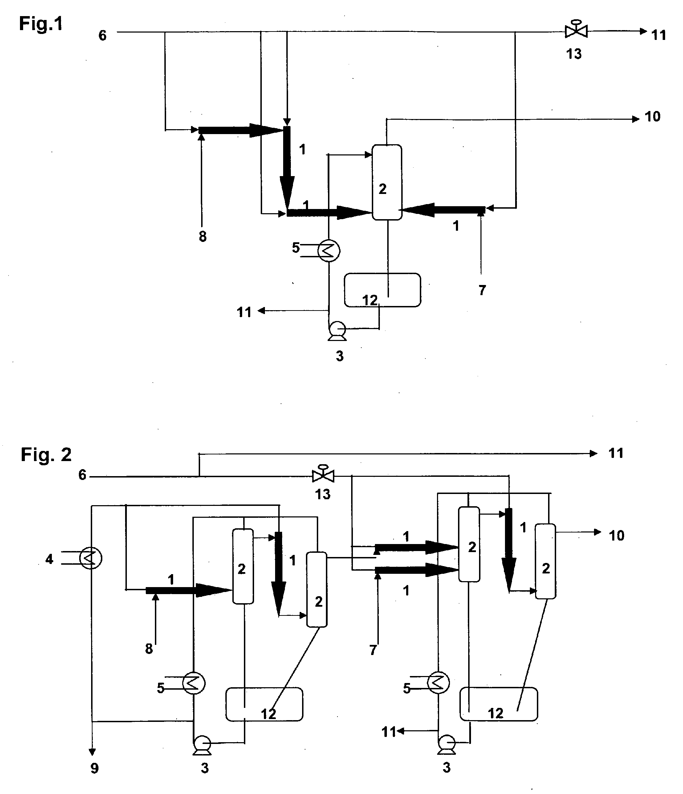

Vorzugsweise ist das zweite System also dem ersten vorgeschaltet und für die Erzeugung des höheren Vakuums, also bevorzugt desjenigen in einem Endreaktor, zuständig, während das erste System für die Erzeugung des restlichen, geringeren Vakuums, also bevorzugt desjenigen in einem Vorpolykondensationsreaktor, eingesetzt wird. Dies wird in Fig. 2 illustriert.

Von besonderer Bedeutung sind oben genannte Verfahren, wenn sie vor der Einleitung der Brüden aus den Vakuumstufen in die Gasstrahlpumpen - also zwischen Reaktor und Pumpe - eine zumindest teilweise Kondensation der Brüden vorsehen. Entsprechend ist in einer zur Durchführung eines solchen Verfahrens geeigneten Vorrichtung zwischen Reaktordruckstufe und Gasstrahlpumpe ein Kondensator angebracht.

Im Sinne der Flexibilisierung ist es sinnvoll, wenn das Kreislaufsystem, das mit dem Brüdengemisch betrieben wird, ebenfalls mit einem zuschaltbaren Verdampfer ausgerüstet wird, der bei Ausfall des Veresterungsbrüden (Anlagenstart, Störung) den zusätzlich benötigten Treibdampf erzeugt. Alternativ kann auch der Diolverdampfer des Vorsystems größer ausgelegt werden und mit einer Einspeiseleitung mit dem zweiten System verbunden werden, oder man bezieht ein Diol-Wasser-Gemisch aus dem Verdampfer der Prozesskolonne.

Die Inhalte aller vorgängig genannten Stand-der-Technik-Dokumente sind als Teil dieser Anmeldung anzusehen, da es nicht zweckdienlich ist, das dem Fachmann zur Verfügung stehende Wissen um die Vielzahl an Verfahren und Vorrichtungen zur Polyesterherstellung zu wiederholen.

Die nachstehende Erläuterung der Erfindung in Form von Zeichnungen soll nicht als Beschränkung der Erfindung auf die gezeigten Ausführungsformen interpretiert werden.
- Fig. 1: Die Figur zeigt schematisch ein Vakuumaggregat zur Drucksenkung im Vorpolykondensations- und Endreaktor, wobei die Gasstrahlpumpen mit unrektifizierten Brüden als Treibmedium betrieben werden.
Der Brüden des Endreaktors wird über eine Zuleitung **(8)** entweder direkt oder nach einer Vorkondensation einer dreistufigen Gasstrahlpumpe, d.h. drei in Serie geschalteten Gasstrahlpumpen **(1)** zugeführt, die mit unrektifizierten Brüden aus der Zuleitung aus der Veresterungsstufe **(6)** betrieben werden. Nach der dritten Gasstrahlstufe erfolgt eine Zwischenkondensation in einem Kondensator **(2),** beispielsweise einem Einspritzkondensator, bei einem Druck von 70 mbar oder höher. Die Brüden einer Vorkondensationsstufe werden nach einer möglichen Zwischenkondensation über eine Zuleitung **(7)** den Gasstrahlpumpen **(1)** zugeleitet, in denen sie auf den Druck des (Einspritz-) Kondensators **(2)** gebracht werden. Die verbleibenden Leichtsieder werden mittels einer Pumpe **(10),** vorzugsweise einer Flüssigkeitsringpumpe, oder einer weiteren Dampfstrahlstufe weiter komprimiert. Das kondensierte Gemisch wird über einen Auffangbehälter **(12)** geschleust, von dort teilweise mittels einer Pumpe **(3)** einer Kühleinrichtung **(5)** zugeführt und gekühlt als Kondensationsmittel in den Kondensator **(2)** zurückgeführt. Ein anderer Teil des kondensierten Brüdens wird über die Leitung **(11)** der Rektifikationskolonne zugeführt. In dieser Kolonne wird der Brüden in seine Komponenten, also vornehmlich Wasser und Diol, aufgetrennt. Die Zuleitung des Veresterungsbrüdens sowie die Strahlstufen werden beheizt, um Ablagerungen von Oligomeren zu vermeiden.
- Fig. 2: Die Zeichnung zeigt schematisch ein Vakuumaggregat zur Drucksenkung im Vorpolykondensations- und Endreaktor, bestehend aus zwei Einheiten bzw. Systemen, wobei die Gasstrahlpumpen der einen Einheit mit einem Alkohol und die Gasstrahlpumpen der zweiten Einheit mit unrektifizierten Brüden als Treibmedium betrieben werden.
Der Brüden des Endreaktors wird über eine Zuleitung **(8)** entweder direkt oder nach einer Vorkondensation einer konventionellem zweistufigen, mit Diol betriebenen Gasstrahlpumpe **(1)** mit Zwischenkondensatiön **(2)** zugeführt und auf einen Druck von ca. 30-40 mbar verdichtet. Anschließend wird der verbleibende Brüden einer weiteren Gasstrahlpumpe **(1),** welche mittels über eine Zuleitung von der Veresterungsstufe **(6)** gelieferten, unrektifizierten Brüdens betrieben wird, zugeleitet, welche das Brüdengemisch in einen Kondensator (2) führt.. Parallel dazu wird das eventuell vorkondensierte Brüdengemisch der Vorkondensationsstufe **(7)** mittels einer weiteren Gasstrahlpumpe **(1),** die mit Veresterungsbrüden angetrieben wird, auf den Druck des Kondensators **(2)** gebracht. Das verdichtete Brüdengemisch wird im Kondensator **(2)** kondensiert und der verbleibende gasförmige Teil wird anschließend mittels einer weiteren Gasstrahlpumpe **(1)** auf ca. 180 mbar komprimiert. Der nach Durchlaufen eines weiteren Kondensators **(2)** verbleibende gasförmige Teil des Brüden wird anschließend einer Wasserringpumpe **(10)** zugeführt. Das im Kondensator **(2)** kondensierte Gemisch wird über einen Auffangbehälter **(12)** einer Zuleitung zur Prozesskolonne **(11)** zugeführt, in der Diol und Wasser aufgetrennt werden. Der Vordruck des Diol-Wasserdampfes wird mit einem Druckregelventil **(13)** eingestellt. Die Zuleitung des Veresterungsbrüdens sowie die Strahlstufen werden beheizt, um Ablagerungen von Oligomeren zu vermeiden.

Die Erfindung soll nachfolgend anhand einiger Ausführungsbeispiele erläutert werden, wobei die Erfindung sich natürlich nicht auf die darin genannten Ausführungsformen beschränkt.

### Beispiel 1

In einer erfindungsgemäßen Anlage bzw. einem erfindungsgemäßen Verfahren zur Herstellung von PET besteht der Prozess aus vier Reaktionsdruckstufen: einer ersten und zweiten Veresterung-, einer Vorkondensation- und einer Endreaktorstufe.
In die erste Veresterungsstufe ES1 wird eine pastöse Mischung aus Terephthalsäure und Ethylenglykol sowie zusätzliches Ethylenglykol und Katalysator eingespeist. Bei Drücken um 1800 mbar (absolut), Temperaturen von 268°C und einer Verweilzeit von ca. 180 Minuten erfolgt eine Veresterungsreaktion auf ca. 92% Umsatz, dabei wird das bei der Reaktion entstehende Wasser zusammen mit überschüssigem Glykol dampfförmig abgezogen. In einer zweiten Veresterungsstufe wird die Reaktion bei 1000 mbar, 270°C und einer Verweilzeit von ca. 80 Minuten bis zu einem Umsatz von ca. 97% fortgesetzt. Nach Abtrennung eines Brüdenteilstromes der ersten Veresterungsstufe zur Vakuumerzeugung werden die Brüden beider Veresterungsstufen einer Rektifikationskolonne zugeführt, das Reaktionswasser über Kopf abgetrennt und das im Sumpf der Kolonne angereicherte Glykol dem Prozess wieder zugeführt.

In einer sich anschließenden Vorkondensation wird bei 10 mbar, 273°C und 80 Minuten Verweilzeit der Umsatz auf 99.5% erhöht und ein mittleres Molgewicht um 4000 g/mol erreicht. Im Endreaktor erfolgt dann bei 1 mbar, 280°C und ca. 130 Minuten Verweilzeit die Erhöhung auf das gewünschte Molgewicht von 16000 - 20000 g/mol. Die Brüden der Vakuumstufen werden jeweils mit einem Einspritzkondensator teilweise kondensiert und dann einem Vakuumsystem wie in Fig. 2 dargestellt zugeführt.

Der Brüden des Endreaktors wird zunächst mit einem Einspritzkondensator teilweise kondensiert und dann einem zweistufigen Glykoldampfstrahler zugeführt, der eine Verdichtung auf ca. 35 mbar erreicht.

Der Brüden der Vorkondensationsstufe wird mit Hilfe eines Einspritzkondensators teilweise kondensiert und dann einem Dampfstrahler zugeführt, der mittels eines Teilstromes des unrektifizierten Brüdens der ersten Veresterungsstufe, d.h. mit einem Dampfgemisch von ca. 47% Wasser und 53% Ethylenglykol, angetrieben wird und den Restbrüden der Vorkondensationsstufe auf ca. 80 mbar verdichtet. Ebenso wird der Restbrüden des Endreaktors mittels eines veresterungsdampfgetriebenen Dampfstrahlers auf 80 mbar weiterkomprimiert. Nun werden die Restbrüden aus Vorkondensation und Endreaktor gemeinsam mit dem Treibdampf in einem Einspritzkondensator teilweise kondensiert und in einem weiteren Kompressionsschritt in einem Dampfstrahler auf 180 mbar gebracht. Nach einer weiteren Zwischenkondensation erfolgt die Verdichtung auf Atmosphärendruck mittels einer Flüssigkeitsringpumpe. Die kondensierten Brüden werden der Rektifikationskolonne zur Abtrennung des Wassers zugeführt.

### Beispiel 2:

Bei einem Vergleichsprozess nach dem Stand der Technik wird analog zu Beispiel 1 verfahren, aber mit dem Unterschied, dass die gesamten Brüden der Veresterungsstufen dem Sumpf der Rektifikationskolonne zugeführt werden und das Vakuum für die Vakuumstufen mittels eines Glykolstrahlers, wie er in EP0685502B1 beschrieben ist, erzeugt wird. Dabei wird das wasserhaltige Kondensat der Vorkondensationsstufe mit Glykol versetzt, um die Oligomere zu lösen, und ebenfalls der Rektifikationskolonne zugeführt.
Im Gegensatz zu Beispiel 1 ergibt sich für ein Verfahren nach Beispiel 2 ein um etwa 5% erhöhter Gesamtenergiebedarf.

### Bezugszeichenliste:

- 1: Gasstrahlpumpe
- 2: Kondensator
- 3: Pumpe
- 4: Verdampfungseinrichtung
- 5: Kühleinrichtung
- 6: Zuleitung unrektifizierter Brüden aus Veresterungs- / Umesterungsstufe
- 7: Zuleitung von Brüden aus Vorpolykondensationsstufe
- 8: Zuleitung von Brüden aus Endreaktor
- 9: Leitung zum Pastenansatz
- 10: Leitung zur Vakuumpumpe, vorzugsweise Flüssigkeitsringpumpe
- 11: Leitung zu Rektifikationskolonne / Trennkolonne
- 12: Auffangbehälter
- 13: Druckventil

## Patentansprüche

1. Verfahren zur Herstellung von Polyestern und/oder Copolyestern in mehreren Prozessstufen, beinhaltend eine oder mehrere Veresterungs- bzw. Umesterungsstufen und eine oder mehrere Polykondensationsstufen, **dadurch gekennzeichnet, dass** der unrektifizierte Brüden aus mindestens einer Veresterungs- bzw. Umesterungsstufe zumindest teilweise zur Erzeugung mindestens eines Teils des Vakuums als Treibgas in mindestens zwei Gasstrahlpumpen für eine oder mehrere der nachfolgenden Polykondensationsstufen verwendet wird.

2. Verfahren nach Anspruch 1, **dadurch gekennzeichnet, dass** zumindest ein Teil des Vakuums mittels mehrerer hintereinandergeschalteter Gasstrahlpumpen unter Verwendung des unrektifizierten Brüdens als Treibmittel erzeugt wird.

3. Verfahren nach einem der vorangehenden Ansprüche, **dadurch gekennzeichnet, dass** der zur Erzeugung des Vakuums eingesetzte unrektifizierte Brüden nachfolgend einer Trennkolonne zugeführt wird.

4. Verfahren nach einem der vorangehenden Ansprüche, **dadurch gekennzeichnet, dass** der Druck des zur Vakuumerzeugung eingesetzten unrektifizierten Brüden näherungsweise konstant gehalten wird.

5. Verfahren nach einem der vorangehenden Ansprüche, **dadurch gekennzeichnet, dass** ein Teil des in den Prozessstufen notwendigen Vakuums durch einen oder mehrere Gasstrahlpumpen erzeugt wird, welche als Treibgas einen im wesentlichen reinen Diol verwenden, wobei es sich bei dem Diol vorzugsweise um den in der Veresterungsreaktion als Alkoholkomponente eingesetzten Diol handelt.

6. Vorrichtung zur Herstellung von Polyestern und/oder Copolyestern, beinhaltend eine oder mehrere Veresterungs- und/oder Umesterungsstufen, eine oder mehrere damit verbundene Trenneinrichtungen und eine oder mehrere Polykondensationsstufen, **dadurch gekennzeichnet, dass** die Vorrichtung zwischen dem oder den Reaktoren der Veresterungs- und/oder Umesterungsstufe und der damit verbundenen Trenneinrichtung apparative Mittel zur Abzweigung zumindest eines Teils des aus den Reaktoren der Veresterungs- und/oder Umesterungsstufe in die Trenneinrichtung fließenden unrektifizierten Brüden aufweist, die wiederum mit mindestens zwei Gasstrahlpumpen zur Vakuumerzeugung verbunden sind, welche einem oder mehreren Polykondensationsreaktoren zugeordnet sind.

7. Vorrichtung nach Anspruch 6, **dadurch gekennzeichnet, dass** mindestens einem Teil der Gasstrahlpumpen mindestens ein Kondensator nachgeordnet ist.

8. Vorrichtung nach einem der Ansprüche 6 - 7, **dadurch gekennzeichnet, dass** den Gasstrahlpumpen mindestens eine Rektifikationskolonne nachgeordnet ist.

## Claims

1. A method for producing polyesters and/or co-polyesters in multiple processing stages, including one or more esterification and/or re-esterification stages and one or more polycondensation stages, **characterized in that** the unrectified vapor from at least one esterification and/or re-esterification stage is at least partially used for generating at least a part of the vacuum as the propellant gas in at least two gas jet pumps for one or more of the following polycondensation stages.

2. The method according to Claim 1, **characterized in that** at least a part of the vacuum is generated using multiple gas jet pumps, which are connected in series, employing the unrectified vapor as the propellant.

3. The method according to one of the preceding claims, **characterized in that** the unrectified vapor used to generate the vacuum is subsequently supplied to a separating column.

4. The method according to one of the preceding claims, **characterized in that** the pressure of the unrectified vapors used for the vacuum generation is kept approximately constant.

5. The method according to one of the preceding claims, **characterized in that** a part of the vacuum required in the processing stages is generated by one or more gas jet pumps, which use an essentially pure diol as the propellant gas, the diol preferably being the diol used in the esterification reaction as the alcohol component.

6. A device for producing polyesters and/or copolyesters, including one or more esterification and/or re-esterification stages, one or more separation units connected thereto, and one or more polycondensation stages, **characterized in that** the device has apparatus means, between the reactor or reactors of the esterification and/or re-esterification stage and the separation unit connected thereto, for branching off at least a part of the unrectified vapor flowing from the reactors of the esterification and/or re-esterification stage into the separation unit, which is in turn connected to at least two gas jet pumps for the vacuum generation, which are associated with one or more polycondensation reactors.

7. The device according to Claim 6, **characterized in that** at least one condenser is situated downstream from at least a part of the gas jet pumps.

8. The device as recited in one of Claims 6-7, **characterized in that** at least one rectification column is situated downstream from the gas jet pumps.

## Revendications

1. Procédé de fabrication de polyesters et/ou de copolyesters en plusieurs étapes de processus, contenant une ou plusieurs étapes d'estérification, respectivement de transestérification et une ou plusieurs étapes de polycondensation, **caractérisé en ce que** les buées non rectifiées provenant d'au moins une étape d'estérification, resp. de transestérification sont utilisées au moins partiellement afin de générer au moins une partie du vide comme gaz propulseur dans au moins deux pompes à éjecteur à gaz destinées à une ou plusieurs des étapes de polycondensation consécutives.

2. Procédé selon la revendication 1, **caractérisé en ce que** au moins une partie du vide est générée au moyen de plusieurs pompes à éjecteur à gaz branchées les unes derrière les autres en utilisant les buées non rectifiées comme agent propulseur.

3. Procédé selon une des revendications précédentes, **caractérisé en ce que** la buée non rectifiée employée pour la génération du vide est ensuite introduite dans une colonne de séparation.

4. Procédé selon une des revendications précédentes, **caractérisé en ce que** la pression des buées non rectifiées employées pour la génération du vide est maintenue approximativement constante.

5. Procédé selon une des revendications précédentes, **caractérisé en ce que** une partie du vide nécessaire dans les étapes de processus est généré par une ou plusieurs pompes à éjecteurs à gaz, qui emploient comme agent propulseur un diol essentiellement pur, dans lequel le diol consiste de préférence en le diol employé comme composant d'alcool dans la réaction d'estérification.

6. Dispositif de production de polyesters et/ou copolyesters, contenant une ou plusieurs étapes d'estérification et/ou transestérification, un ou plusieurs dispositifs de séparation ainsi relié et une ou plusieurs étapes de polycondensation, **caractérisé en ce que** le dispositif présente entre le ou les réacteurs de l'étape d'estérification et/ou de transestérification et le dispositif de séparation ainsi relié des moyens d'appareillage pour la déviation d'au moins une partie des buées non rectifiées s'écoulant hors des réacteurs de l'étape d'estérification et/ou transestérification dans le dispositif de séparation, qui sont à leur tour reliés à au moins deux pompes à éjecteur à gaz pour la génération de vide, lesquelles sont coordonnées à un ou plusieurs réacteurs de polycondensation.

7. Dispositif selon la revendication 6, **caractérisé en ce que** au moins un condensateur est placé à la suite d'au moins une partie des pompes à éjecteur à gaz.

8. Dispositif selon une des revendications 6 à 7, **caractérisé en ce que** au moins une colonne de rectification est placée à la suite des pompes à éjecteur à gaz.
